# EUROPEAN PATENT APPLICATION

(11) **EP 3 604 183 A1**
(43) Date of publication of application: **05.02.2020**
(21) Application number: 18723057.8
(22) Date of filing: 27.03.2018
(51) Int. Cl.: B65G 47/91, G01N 21/90, G01N 35/04

(54) **STOPPER ATTACHMENT SYSTEM**

(30) Priority: 27.03.2017 PT 2017109993
(71) Applicant: Tavares Breda, Carlos Manuel, 3830-193 Ílhavo (PT)
(72) Inventor: Tavares Breda, Carlos Manuel, 3830-193 Ílhavo (PT)
(74) Representative: Ferreira, Maria Silvina
(86) International application number: PCT/IB2018/052092
(87) International publication number: WO 2018/178868

(57) **Abstract**

The present application describes a system for fastening stoppers by vacuum, for inspection with artificial vision, pertaining to the field of electronic choice machinery for cork stoppers and derivatives thereof.

This system comprises a vacuum generator (4) which is connected to a central shaft (1) of a rotational mechanical structure. This shaft transmits the vacuum that was generated through an inner channel (2) to its upper end, where contact with a stopper (3) occurs, fastening it by way of a suction effect. Additionally, the shaft (1) is in rotation, which in turn transmits the same movement to the stopper (3), so that its entire body can be analysed by an artificial vision system. This system applies to inspecting cork stoppers and derivatives thereof.

## Description

### Field of the Invention

The present application pertains to a system for fastening stoppers.

### Background of the Invention

As it evolves, industry is more and more demanding in terms of the quality of its end products and the cork industry is no exception, and production plants today often have machines to inspect stoppers electronically.

Existing electronic choice machines for stoppers inspect both the tops and the body of the stopper. Upon inspecting the body, the stopper must be rotated so that the cameras of the artificial vision system can capture images of its entire surroundings, and to transmit rotation to the stopper rollers are used that compress it sideward, or pins that compress its tops. Therefore, there is a strong mechanical contact between the rotating parts of the machine and the stopper itself.

Indeed, each of these systems, which use rollers or pins to transmit the rotation movement to the stopper, presents different features and limitations associated to them. The system for transmitting rotation by rollers, which compress the stoppers sideward, has the following disadvantages:
- When inspecting the body of the stopper in rotation, it is partially obstructed by the rollers transmitting rotation to it, leaving only a visible window between the rollers for capturing images for inspection, precluding the use of inspection techniques that require access to the entire body of the stopper in one image alone;
- Given the strong mechanical contact between the rollers and the stoppers, it is possible for the stoppers to be damaged during indexing;
- With this rotation transmission method, it is not possible to construct compact inspections units, hence each machine only has one inspection unit, thereby limiting the total pace of the machine.

On the other hand, a rotation transmission system that uses pins promotes the compression of the tops of the stoppers, not obstructing therefore the moments of body inspection of the stopper in rotation, enabling the use of inspection techniques which would not be possible with the systems using rollers. Nevertheless, there are also disadvantages associated to it:
- The system involves a significantly high construction cost;
- It has high mechanical complexity, requiring frequent high-cost maintenance;
- This system has low flexibility, not allowing the inspection of different stopper sizes in the same machine;
- Since there is a strong mechanical contact between the pins and the stoppers, it is possible for the stoppers to be damaged during indexing;

In conclusion, the systems known in the prior art have proven to be very complex and require high maintenance. Additionally, the use of rollers or pins to provide the necessary and crucial rotation movement of the stopper during the inspection either creates a major obstacle to the image capturing performed by the artificial vision system, or increases the possibility of damage to the body of the stopper itself, due to its strong mechanical contact.

### Summary

A system for fastening stoppers is disclosed, characterized by comprising:
- a rotational mechanical structure;
- a vacuum generator;
wherein the rotational mechanical structure comprises a central shaft along its vertical axis, the lower end of which connects to the vacuum generator; said central shaft comprising an inner channel for conducting the vacuum generated by the generator to its upper end, the side of which that makes contact with a stopper comprises at least an orifice to produce the suction effect.

### General Description

The present application describes a system for fastening stoppers by vacuum, for quality inspection using an artificial vision system, pertaining to the field of electronic choice machinery for cork stoppers and derivatives thereof.

Contrary to existing systems, the technology now developed adopts a rotation mechanism that transmits movement to the stopper by vacuum. Therefore, the physical/mechanical contact between the stopper and the rotational mechanism is minimized, thereby promoting the preservation of its ideal state, while also promoting the full acquisition of images, of its entire surroundings, by the artificial vision system.

The system developed for fastening stoppers comprises a rotational mechanical structure, which comprises a central shaft along its vertical axis, the lower end of which is connected to a vacuum generator. By means of an inner channel, the central shaft conducts the vacuum produced by the generator to its upper end, the outer side of which makes contact with the stopper. By way of orifices disposed on the upper surface of the central shaft, the vacuum produced by the generator and conducted along the inner channel produces the suction effect on said stopper, ensuring that it is fastened on said upper surface.

Besides, the rotational mechanical structure imparts a rotation movement on the central shaft which, in turn, transmits this rotation to the stopper. During this rotation movement, the artificial vision system periodically captures images of the stopper through cameras for subsequent analysis.

Therefore, the present system for fastening stoppers by vacuum for inspection with artificial vision has significant advantages over existing systems:
- When inspecting the body of the stopper in rotation, it is entirely unobstructed, enabling the use of inspection techniques by image processing, which has not been possible with the existing systems;
- Since the mechanical connection for transmitting rotation is not achieved by compression but rather by vacuum, the possibility of damaging the stoppers during handling is thus eliminated;
- Reduction of the dimensions relative to the inspection modules, making them more compact, enabling the integration of more than one module per machine, increasing the pace thereof.

### Brief description of the drawings

For a better understanding of the present application figures have been attached, which represent preferred embodiments but are not meant to limit the art disclosed herein.

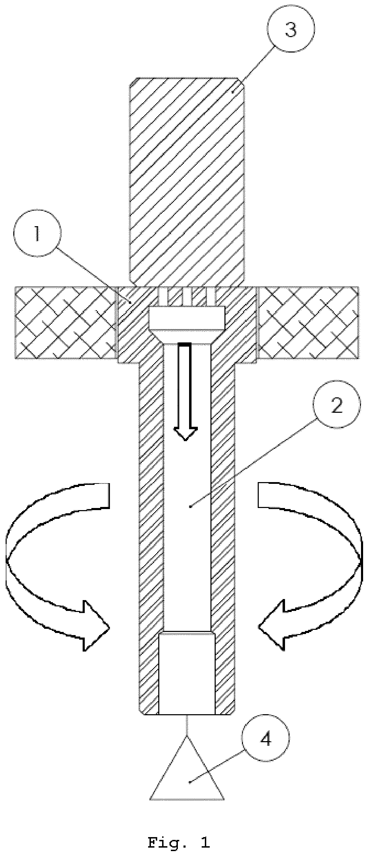

Figure 1 illustrates an embodiment of the system developed for fastening stoppers, wherein the reference numbers represent:
1 - central shaft;
2 - inner channel;
3 - stopper;
4 - vacuum generator.

### Description of embodiments

Referring to the figures, some embodiments are now described in more detail, which are not, however, meant to limit the scope of the present application.

The system developed for fastening stoppers comprises a rotational mechanical structure, which comprises a central shaft (1), the lower end of which connects to a vacuum generator (4). By way of an inner channel (2), the central shaft (1) conducts the vacuum produced by the vacuum generator (4) to the upper end, the outer side of which makes contact with the lower top of a stopper (3). By at least an orifice disposed on the upper surface of the central shaft (1), the vacuum produced by the vacuum generator (4) and conducted along the inner channel (2) produces the suction effect at the lower top of the stopper (3), ensuring its fastening in its vertical position. The shaft (1) is in rotation which, in turn, transmits the rotation to the stopper (3). During the rotation of the stopper (3), its body will be analysed by an artificial vision system. This fastening system is applied in electronic inspection systems for cork stoppers and derivatives thereof that use artificial vision systems.

Naturally, the present description is not in any way restricted to the embodiments disclosed in this document and a person with ordinary skills in the art may envisage many possibilities of modifying it without straying from the general idea, as defined in the claims. The preferred embodiments described above are obviously combinable with one another. The following claims additionally define preferred embodiments.

## Claims

1. System for fastening stoppers **characterized by** comprising:
- a rotational mechanical structure;
- a vacuum generator;
wherein the rotational mechanical structure comprises a central shaft along its vertical axis, the lower end of which connects to the vacuum generator; said central shaft comprising an inner channel for conducting the vacuum generated by the generator to its upper end, the side of which that makes contact with a stopper comprises at least an orifice.
